# FASCICULE DE BREVET EUROPEEN

(11) **EP 3 597 708 B1**
(45) Date de publication et mention de la délivrance du brevet: **06.10.2021**
(21) Numéro de dépôt: 18305990.6
(22) Date de dépôt: 19.07.2018
(51) Int. Cl.: C09D 5/34, C09D 7/65, C04B 26/04

(54) **COMPOSITION POUR MASTIC DE REBOUCHAGE COMPRENANT DES FIBRES ORGANIQUES**
ZUSAMMENSETZUNG FÜR FÜLLSPACHTELMASSE, DIE ORGANISCHE FASERN ENTHÄLT
COMPOSITION FOR SEALER COMPRISING ORGANIC FIBRES

(43) Date de publication de la demande: 22.01.2020
(73) Titulaire: Raigi, 28310 Rouvray Saint Denis (FR)
(72) Inventeur: ROCLE, Dominique, 45400 FLEURY LES AUBRAIS (FR); PERRIER, Olivier, 45170 NEUVILLE-AUX-BOIS (FR); LEGAY, Stéphane, 45170 SAINT LYE LA FORET (FR); LAVALLE, Juliette, 78120 RAMBOUILLET (FR)
(74) Mandataire: Regimbeau

(56) Documents cités:
- EP-A1- 0 982 364
- EP-A1- 2 859 050
- EP-A2- 0 258 988
- WO-A1-87/05894
- WO-A1-03/025075
- GB-A- 1 497 855
- US-A1- 2006 096 074
- US-A1- 2007 144 695

## Description

### DOMAINE DE L'INVENTION

La présente invention se situe dans le domaine du rebouchage d'irrégularités, telles que des trous, fentes ou aspérités, présentes sur un support, et notamment dans le domaine des mastics pour rebouchage, en particulier ayant des propriétés répulsives.

La présente invention porte en particulier sur une composition pour mastic de rebouchage comprenant des fibres organiques, ainsi qu'un kit pour l'application d'une telle composition de rebouchage avec pistolet à mastic. La présente invention porte en outre sur un procédé de rebouchage d'un support présentant des irrégularités telles que des trous, des fentes et des aspérités. Enfin, la présente invention porte sur l'utilisation de fibres organiques dans une composition pour mastic de rebouchage.

### ART ANTERIEUR

Actuellement, des mastics ayant des propriétés répulsives, notamment raticides, sont utilisés pour calfeutrer des irrégularités dans des supports, notamment des murs de bâtiment, permettant ainsi d'étanchéifier et isoler le support comprenant l'irrégularité, tout en éloignant les rongeurs.

Les compositions de ces mastics comprennent alors des agents répulsifs telles que des huiles essentielles et/ou des grains de verre pilé.

EP0982364 A1 et US2006/096074 A1 divulguent des compositions de mastic de rebouchage comprenant des fibres organiques et des billes de verre. WO87/05894 A1 divulgue une composition pour sceller les surfaces d'asphalte comprenant des fibres organiques et des grains de verre.

Cependant, il a été constaté que les compositions de mastic comprenant des grains de verre pilé avaient une plus forte tendance à la fissuration pendant ou après le séchage. Cette tendance est encore plus importante lorsque les grains de verre pilé ont une faible granulométrie.

A ce jour, les compositions de mastic comprenant des grains de verre pilé sont fournies sous la forme de pâte incorporée dans un seau. Ceci permet d'utiliser des grains de verre pilé de granulométrie importante (de l'ordre de quelques millimètres) sans engendrer de difficultés d'application.

Cependant, l'utilisation de pistolet à mastic est avantageuse pour une meilleure précision lors de l'application du mastic et pour une amélioration des conditions d'utilisation. Or, pour être appliquée à l'aide d'un pistolet à mastic, la composition de mastic doit comprendre des grains de verre pilé de faible granulométrie (de préférence inférieure à 1 mm).

Ainsi, il existe un besoin d'une composition pour mastic de rebouchage comprenant des grains de verre pilé adaptée à l'application par pistolet à mastic et ne fissurant pas pendant ou après le séchage.

### RESUME DE L'INVENTION

Dans le cadre de la présente invention, les inventeurs ont découvert que la présence de fibres organiques dans une composition pour mastic de rebouchage, notamment une composition pour Copie propre mastic de rebouchage comprenant des grains de verre pilé, permet de limiter, voire éviter, la fissuration du mastic dans le temps, malgré les sollicitations extérieures.

En outre, les inventeurs ont découvert que les fibres organiques n'ont pas d'impact sur les propriétés physico-chimiques du mastic de rebouchage, notamment sur le temps de séchage ou sur l'étanchéité, et un très faible impact sur le coût de la matière.

Dans un premier aspect, la présente invention porte donc sur une composition pour mastic de rebouchage comprenant des fibres organiques.

L'invention porte en outre sur un kit pour l'application d'une composition pour mastic de rebouchage comprenant :
i. une composition pour mastic de rebouchage selon l'invention ;
ii. optionnellement une cartouche pour pistolet à mastic ; et
iii. un pistolet à mastic,
dans lequel la composition i) pour mastic de rebouchage est adaptée pour être appliquée avec le pistolet à mastic ii).

L'invention concerne également un procédé de rebouchage d'un support présentant des irrégularités telles que des trous, fentes ou aspérités, comprenant les étapes suivantes :
a) application d'une composition de mastic pour rebouchage selon l'invention sur ou dans les irrégularités du support ; et
b) séchage de la composition, de préférence à température comprise entre 10 et 40 °C.

L'invention porte en outre sur l'utilisation de fibres organiques dans un mastic de rebouchage, notamment pour limiter l'apparition de fissures.

### DEFINITION

Par « composition pour mastic de rebouchage » on entend, au sens de la présente invention, une composition de consistance pâteuse ayant un caractère adhésif et susceptible de durcir en masse. La composition pour mastic de rebouchage est adaptée pour être appliquée sur ou dans des irrégularités, telles que des trous, creux, fentes ou aspérités, puis durcir à température comprise entre 10 et 40 °C pour former un matériau solide. Ce matériau solide, également appelé « mastic sec », peut notamment être étanche, isolant, ignifugeant et/ou répulsif. Ainsi, la composition de mastic permet notamment de calfeutrer, réparer, masquer, coller, sceller, ou réaliser le jointement entre au moins deux éléments. Dans la cadre de la présente invention, les termes « composition pour mastic de rebouchage » et « composition de mastic » peuvent être utilisés de manière équivalente.

Par « pistolet à mastic » on entend, au sens de la présente invention, un dispositif apte à délivrer une composition de consistance pâteuse à partir d'une cartouche comprenant une telle composition. Le pistolet à mastic comprend généralement une enveloppe adaptée à recevoir la cartouche de composition, une première extrémité de l'enveloppe étant rattachée à une poignée et une tige de poussée et la seconde extrémité étant adaptée sous forme d'ouverture pour libérer la composition de manière contrôlée. La tige de poussée est adaptée pour pénétrer dans la cartouche permettant ainsi la libération de la composition par l'ouverture de la seconde extrémité, généralement par pression sur la poignée à laquelle elle est rattachée.

Par « agent odorant » on entend, au sens de la présente invention, un composé dont les propriétés odorantes entrainent l'apparition d'une perception olfactive chez l'homme ou l'animal, notamment une perception olfactive répulsive. Dans le cadre de la présente invention, l'agent odorant déclenche chez l'animal, notamment chez les rongeurs, une perception olfactive répulsive, c'est-à-dire qui le repoussera. Ainsi, l'odeur de l'agent odorant repousse l'animal, notamment le rongeur, et plus particulièrement le rat.

### DESCRIPTION DETAILLEE DE L'INVENTION

### Composition pour mastic de rebouchage

Selon un premier objet, la présente invention porte sur une composition pour mastic de rebouchage comprenant des fibres organiques.

Les compositions usuelles pour mastic de rebouchage sont connues de l'homme du métier. Ces compositions comprennent généralement au moins un liant, des charges minérales, et des additifs optionnels. La composition selon l'invention comprend ainsi ces ingrédients et en outre des fibres organiques.

Les fibres organiques sont choisies parmi les fibres organiques synthétiques ou naturelles, avantageusement parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), les fibres de polyamide ou polyimide, les fibres d'aramide, les fibres de cellulose, de soie, de lin, de coton, de bambou, de viscose; d'acétate de cellulose, les chlorofibres, les fibres d'acide polylactique, les fibres de polyester, les fibres polyacryliques ou polymodacrylique, les fibres de polybenzimidazole, les fibres polyphénoliques, les fibres polyurées et polyuréthanes, et leurs mélanges.

Avantageusement, les fibres organiques sont choisies parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), les fibres de polyamide ou polyimide, les fibres d'aramide.

Plus avantageusement, les fibres organiques sont des fibres de polypropylène.

La composition selon l'invention comprend une teneur en fibres organiques comprise de 0,001 % à 10 % en poids, avantageusement de 0,001 % à 5 % en poids, plus avantageusement de 0,001 % à 1 % en poids, en particulier de 0,001 % à 0,1 % en poids, par rapport au poids total de la composition.

### Copie propre

Les fibres organiques ont généralement une forme filamentaire, c'est-à-dire qu'elles ont une forme fine et allongée. Ainsi, dans le cadre de la présente invention, les fibres organiques sont caractérisées par leur longueur moyenne et par leur diamètre équivalent moyen. La longueur moyenne et le diamètre équivalent moyen des fibres organiques sont mesurés par des moyens connus de l'homme du métier, par exemple par mesure optique.

Avantageusement, la longueur individuelle des fibres organiques selon la présente invention est comprise de 1 à 50 mm, avantageusement 1 à 20 mm, plus avantageusement 1 à 10 mm, plus avantageusement de 1 mm à 3 mm.

Avantageusement, les fibres organiques ont un diamètre équivalent moyen compris de 10 µm à 800 µm, plus avantageusement de 10 µm à 500 µm, plus avantageusement de 10 µm à 100 µm.

Dans le cadre de la présente invention, il est avantageux d'utiliser des fibres organiques de faible longueur et/ou faible diamètre car cela permet d'augmenter le nombre de fibres pouvant être incorporées dans la composition. Or, plus le nombre de fibres est élevé, meilleure sera la dispersion des fibres dans la composition et ainsi meilleure sera la résistance à la fissuration.

Ces fibres organiques peuvent se présenter sous forme d'objet constitué soit de monobrin, soit de multibrins. Les fibres organiques peuvent également être utilisées sous forme de structures tissées ou non tissées ou de toron hybride (mélange de filaments). Les fibres organiques utilisées dans le cadre de la présente invention sont de préférence des fibres non tissées. Les fibres organiques sont donc de préférence dispersées dans la composition de manière désordonnée.

Dans toute la présente description les fibres organiques sont telles que définies ci-dessus.

La composition pour mastic de rebouchage selon l'invention comprend en outre des grains de verre pilé, sont utilisés en tant qu'agent répulsif, notamment pour les rongeurs et plus particulièrement les rats.

Les grains de verre pilé utilisés dans le cadre de l'invention ont une granulométrie moyenne de 0 à 3 mm, avantageusement de 0 à 1,5 mm, plus avantageusement de 0 à 800 µm. La granulométrie moyenne des grains de verre est la distribution statique des tailles des grains de verre et est mesurée par des moyens connus de l'homme du métier, notamment par tamisage et par établissement d'une courbe de répartition granulométrique type gaussienne.

Une faible granulométrie des grains de verre permet notamment de pouvoir utiliser la composition selon l'invention dans un pistolet à mastic. Ainsi, l'homme du métier saura adapter la granulométrie des grains de verre en fonction de l'utilisation qu'il compte faire de la composition selon l'invention.

La teneur en grains de verre dans la composition selon l'invention est de 10 à 70 % en poids, avantageusement de 20 à 70 % en poids, avantageusement de 30 à 70 % en poids, par rapport au poids total de la composition.

Avantageusement, la composition selon l'invention comprend au moins un liant choisi parmi les liants organiques d'origine naturelle, les liants synthétiques, et leurs mélanges. Parmi les liants organiques d'origine naturelle, on peut avantageusement citer : les huiles végétales (telle que l'huile de lin), les résines végétales (telle que la Poix, la gomme naturelle), les résines d'origine animale (telle que la gomme laque, la cire), le latex naturel, et leurs mélanges. Parmi les liants synthétiques, on peut avantageusement citer : les élastomères (tel que les silicones, et les polyuréthanes), les copolymères en phase aqueuse (tels que les copolymères acrylique, styrène-acrylique, styrène-butadiène, vinyl-acétate, éthylène-vinyl-acétate, polycarboxylate...), le latex synthétique, et leurs mélanges.

Avantageusement, la composition selon l'invention comprend au moins un liant choisi parmi les liants synthétiques, notamment parmi les copolymères en phase aqueuse, tels que les copolymères acrylique, styrène-acrylique, styrène-butadiène, vinyl-acétate, éthylène-vinyl-acétate, polycarboxylate, le latex synthétique, et leurs mélanges.

Plus avantageusement, le liant est un copolymère acrylique ou styrène-acrylique ou styrène-butadiène.

Avantageusement, la composition pour mastic de rebouchage selon l'invention comprend de 5 à 90 % en poids, avantageusement de 10 à 70 % en poids, plus avantageusement de 20 à 40 % en poids, de liant(s) par rapport au poids total de la composition.

Avantageusement, la composition pour mastic de rebouchage selon l'invention comprend de 10 à 70 % en poids, plus avantageusement de 10 à 50 % en poids, de charges minérales, par rapport au poids total de la composition.

Avantageusement, les charges minérales sont choisies parmi le carbonate de calcium, le carbonate de magnésium, le carbonate de zinc, le carbonate de sodium ou le carbonate de potassium, la silice, la craie, l'argile notamment l'argile blanc d'Espagne, le talc, l'hydroxyde d'aluminium, le noir de carbone, le mica, la baryte, la chaux vive, et leurs mélanges. Plus avantageusement, les charges minérales sont choisies parmi le carbonate de calcium, la silice, et leurs mélanges.

Avantageusement, la composition pour mastic de rebouchage selon l'invention comprend en outre de 0 à 10 % en poids, plus avantageusement de 0,01 à 5 % en poids, d'additifs, par rapport au poids total de la composition. Avantageusement, les additifs sont choisis parmi les additifs retardateur de flamme tel que la paraffine chlorée ou l'alumine hydratée ; les agents mouillants ; les pigments tel que le dioxyde de titane, le noir de carbone, le sulfate de baryum et le lithopone ; les granulés plastiques ; les billes de polystyrène ; les pâtes pigmentaires et colorants tels que les colorants universels ; et leurs mélanges. Les additifs sont avantageusement choisis parmi les additifs retardateurs de flamme tel que la paraffine chlorée ou l'alumine hydratée et les colorants tels que les colorants universels, et leurs mélanges.

De manière avantageuse, lorsque la composition comprend du colorant, la teneur en colorant est comprise de 0 à 5 % en poids, avantageusement de 0,01 à 3 % en poids de colorant, par rapport au poids total de la composition.

Avantageusement, la composition selon l'invention comprend en outre un agent odorant, notamment un agent odorant répulsif.

Habituellement, dans les compositions pour mastic de rebouchage répulsives, l'agent odorant est une ou des huile(s) essentielle(s) ayant des propriétés répulsives. Ces huiles essentielles sont généralement l'huile essentielle de laurier, l'huile essentielle de menthe poivrée, l'huile essentielle de sauge sclarée, et leurs mélanges.

Avantageusement, la teneur en agent odorant dans la composition selon l'invention est de 0 à 5 %, avantageusement de 0,001 à 5 % en poids, avantageusement de 0,01 à 2 % en poids, plus avantageusement de 0,1 à 1 % en poids par rapport au poids total de la composition.

Dans le cadre de la présente invention, chacune des caractéristiques préférées décrites ci-dessus peuvent être combinées pour former des modes de réalisation particulièrement préférés. Des combinaisons particulièrement préférées dans le cadre de l'invention sont présentées ci-dessous :
a) une composition pour mastic de rebouchage selon l'invention comprenant avantageusement :
   - de 5 à 90 %, avantageusement de 10 à 70 %, plus avantageusement de 20 à 40 %, de liants ;
   - de 10 à 70 %, avantageusement de 10 à 50 %, de charges minérales ;
   - de 0 à 10 %, avantageusement de 0,01 à 5 %, d'additifs ;
   - de 0,001 % à 10 %, avantageusement de 0,001 % à 5 %, plus avantageusement de 0,001 % à 1 %, en particulier de 0,001 % à 0,1 %, de fibres organiques ;
   - de 10 à 70 %, avantageusement de 20 à 70 %, plus avantageusement de 30 à 70 %, de grains de verre ; et
   - de 0 à 5 %, avantageusement de 0,001 à 5 %, avantageusement de 0,01 à 2 %, plus avantageusement de 0,1 à 1 %, d'agent odorant, de préférence sous forme d'huile(s) essentielle(s)
   les pourcentages étant exprimés en poids par rapport au poids total de la composition ;
b) une composition pour mastic de rebouchage selon l'invention comprenant avantageusement :
   - de 5 à 90 % de liants ;
   - de 10 à 70 % de charges minérales ;
   - de 0 à 10 % d'additifs ;
   - de 0,001 % à 10 %, avantageusement de 0,001 % à 5 %, plus avantageusement de 0,001 % à 1 %, en particulier de 0,001 % à 0,1 %, de fibres organiques ;
   - de 10 à 70 % de grains de verre ; et
   - de 0 à 5 % d'agent odorant,
   les pourcentages étant exprimés en poids par rapport au poids total de la composition ;
c) une composition pour mastic de rebouchage selon l'invention comprenant avantageusement :
   - de 5 à 90 % de liants ;
   - de 10 à 70 % de charges minérales ;
   - de 0 à 10 % d'additifs ;
   - de 0,001 % à 5 % de fibres organiques ;
   - de 10 à 70 %, avantageusement de 20 à 70 %, plus avantageusement de 30 à 70 %, de grains de verre ; et
   - de 0 à 5 % d'agent odorant,
   les pourcentages étant exprimés en poids par rapport au poids total de la composition ;
d) une composition pour mastic de rebouchage selon l'invention comprenant avantageusement :
   - de 10 à 70 % de liants ;
   - de 10 à 50 %, de charges minérales ;
   - de 0 à 10 % d'additifs ;
   - de 0,001 % à 1 % de fibres organiques ;
   - de 20 à 70 % de grains de verre ; et
   - de 0 à 5 % d'agent odorant,
   les pourcentages étant exprimés en poids par rapport au poids total de la composition ;
e) une composition pour mastic de rebouchage selon l'invention comprenant avantageusement :
   - de 20 à 40 % de liants ;
   - de 10 à 50 %, de charges minérales ;
   - de 0 à 10 % d'additifs ;
   - de 0,001 % à 1 % de fibres organiques ;
   - de 30 à 70 % de grains de verre ; et
   - de 0 à 5 % d'agent odorant
   les pourcentages étant exprimés en poids par rapport au poids total de la composition ; ou
f) une composition pour mastic de rebouchage selon l'invention comprenant avantageusement :
   - de 20 à 40 % de liants ;
   - de 10 à 50 %, de charges minérales ;
   - de 0 à 10 % d'additifs ;
   - de 0,001 % à 0,1 % de fibres organiques ;
   - de 30 à 70 % de grains de verre ; et
   - de 0 à 5 % d'agent odorant
   les pourcentages étant exprimés en poids par rapport au poids total de la composition.

Dans le cadre de la présente invention, la composition pour mastic peut être préparée par toute méthode connue de l'homme du métier. Par exemple, la composition pour mastic selon l'invention peut être préparée par mélange de l'ensemble des ingrédients souhaités dans un mélangeur planétaire.

### Kit pour l'application d'un mastic de rebouchage

Dans un second objet, l'invention porte sur un kit pour l'application de la composition pour mastic de rebouchage selon l'invention. Le kit selon l'invention comprend :
i. une composition pour mastic de rebouchage selon la présente invention ;
ii. optionnellement, une cartouche pour pistolet à mastic ; et
iii. un pistolet à mastic,
dans lequel la composition pour mastic de rebouchage est adaptée pour être appliquée avec un pistolet à mastic.

Avantageusement, le kit selon l'invention comprend une cartouche pour pistolet à mastic.

Avantageusement, dans le kit selon l'invention, la composition pour mastic est directement située dans la cartouche pour pistolet à mastic.

Lorsque le kit selon l'invention comprend une cartouche pour pistolet à mastic dans laquelle est incorporée la composition pour mastic, ladite cartouche peut être une cartouche mono-composant ou bi-composants, de préférence mono-composant. Ladite cartouche peut être en différente matière telle qu'en aluminium ou en plastique. Eventuellement, ladite cartouche peut en outre comprendre un piston intégré et/ou une canule. Avantageusement, la cartouche est une cartouche mono-composant comprenant un piston et une canule.

La composition pour mastic de rebouchage utilisée dans le kit selon l'invention est telle que décrite dans les parties ci-dessus.

L'homme du métier sait aisément adapter la composition pour mastic de rebouchage pour qu'elle puisse être appliquée avec un pistolet à mastic, notamment dans une cartouche pour pistolet à mastic.

Notamment, l'homme du métier sait adapter la viscosité de la composition afin de permettre son écoulement dans le pistolet ou la cartouche et à travers l'ouverture du pistolet ou de la cartouche, ou de la canule de la cartouche.

En outre, lorsque la composition selon l'invention comprend des grains de verre, l'homme du métier sait adapter la taille des grains de verre en fonction de la taille de l'ouverture du pistolet à mastic. Comme décrit dans les parties ci-dessus, les grains de verre utilisés dans le cadre de l'invention ont une granulométrie moyenne de 0 à 3 mm, plus avantageusement de 0 à 1,5 mm, en particulier de 0 à 800 µm. En outre, la teneur en grains de verre dans la composition selon l'invention est de 10 à 70 % en poids, plus avantageusement de 20 à 70 % en poids, par rapport au poids total de la composition.

### Procédé de rebouchage

Dans un troisième objet, l'invention porte sur un procédé de rebouchage d'un support présentant des irrégularités telles que des trous, fentes ou aspérités.

Le procédé selon l'invention, comprend les étapes suivantes :
(A) Application d'une composition de mastic pour rebouchage selon l'invention, sur ou dans les irrégularités du support ; et
(B) Séchage de la composition, de préférence à température comprise entre 10 et 40 °C.

La composition pour mastic de rebouchage utilisée à l'étape (A) selon l'invention est telle que décrite dans les parties ci-dessus, notamment dans la partie composition pour mastic de rebouchage.

Avantageusement, l'étape d'application (A) est effectuée à l'aide d'un pistolet à mastic et optionnellement d'une cartouche pour pistolet à mastic, tels que décrits ci-dessus. Avantageusement, l'étape (A) est effectuée à l'aide du kit selon l'invention, tel que décrit dans les parties ci-dessus.

Avantageusement, l'étape (B) est effectuée en laissant la composition au repos, de préférence à température comprise entre 10 et 40 °C, en particulier entre 20 et 30 °C. De manière avantageuse, l'étape (B) de séchage est effectuée pendant moins de 48 h, avantageusement moins de 36h, plus avantageusement moins de 24 h. En d'autres termes, une fois les durées précitées écoulées, la composition pour mastic de rebouchage s'est transformée en matériau solide, nommé mastic.

### Utilisation

Dans un quatrième objet, la présente invention porte sur l'utilisation de fibres organiques, dans une composition pour mastic de rebouchage selon l'invention.

La composition pour mastic de rebouchage selon l'invention est telle que décrite dans les parties ci-dessus.

L'invention porte sur l'utilisation de fibres organiques, dans une composition pour mastic de rebouchage selon l'invention comprenant en outre des grains de verre.

La composition pour mastic de rebouchage selon l'invention comprend des grains de verre ayant une granulométrie moyenne de 0 à 3 mm, plus avantageusement de 0 à 1,5 mm, en particulier de 0 à 800 µm. La granulométrie moyenne des grains de verre est mesurée par des moyens connus de l'homme du métier, notamment par tamisage.

En outre, la teneur en grains de verre dans la composition selon l'invention est de 10 à 70 % en poids, avantageusement de 20 à 70 % en poids, par rapport au poids total de la composition.

Les fibres organiques sont utilisées pour limiter, voire éviter, l'apparition de fissure pendant ou après le séchage de la composition pour mastic de rebouchage selon l'invention.

Les fibres organiques sont choisies parmi les fibres organiques synthétiques ou naturelles, avantageusement parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), les fibres de polyamide ou polyimide, les fibres d'aramide, les fibres de cellulose, de soie, de lin, de coton, de bambou, de viscose; d'acétate de cellulose, les chlorofibres, les fibres d'acide polylactique, les fibres de polyester, les fibres polyacryliques ou polymodacrylique, les fibres de polybenzimidazole, les fibres polyphénoliques, les fibres polyurées et polyuréthanes, et leurs mélanges.

Avantageusement, les fibres organiques sont choisies parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), les fibres de polyamide ou polyimide, les fibres d'aramide, les fibres de carbone.

Plus avantageusement, les fibres organiques sont des fibres de polypropylène.

La composition selon l'invention comprend une teneur en fibres organiques comprise de 0,001 % à 10 % en poids, avantageusement de 0,001 % à 5 % en poids, plus avantageusement de 0,001 % à 1 % en poids, en particulier de 0,001 % à 0,1 % en poids, par rapport au poids total de la composition.

Les fibres organiques ont généralement une forme filamentaire, c'est-à-dire qu'elles ont une forme fine et allongée. Ainsi, dans le cadre de la présente invention, les fibres organiques sont caractérisées par leur longueur moyenne et par leur diamètre équivalent moyen. La longueur moyenne et le diamètre équivalent moyen des fibres organiques sont mesurés par des moyens connus de l'homme du métier, par exemple par mesure optique.

Avantageusement, la longueur individuelle des fibres organiques selon la présente invention est comprise de 1 à 50 mm, avantageusement 1 à 20 mm, plus avantageusement 1 à 10 mm, plus avantageusement de 1 mm à 3 mm.

Avantageusement, les fibres organiques ont un diamètre équivalent moyen compris de 10 µm à 800 µm, plus avantageusement de 10 µm à 500 µm, plus avantageusement de 10 µm à 100 µm.

Dans le cadre de la présente invention, il est avantageux d'utiliser des fibres organiques de faible longueur et/ou faible diamètre car cela permet d'augmenter le nombre de fibres pouvant être incorporées dans la composition. Or, plus le nombre de fibres est élevé, meilleure sera la dispersion des fibres dans la composition et ainsi meilleure sera la résistance à la fissuration.

Ces fibres organiques peuvent se présenter sous forme d'objet constitué soit de monobrin, soit de multibrins. Les fibres organiques peuvent également être utilisées sous forme de structures tissées ou non tissées ou de toron hybride (mélange de filaments). Les fibres organiques utilisées dans le cadre de la présente invention sont de préférence des fibres non tissées. Les fibres organiques sont donc de préférence dispersées dans la composition de manière désordonnée.

Les exemples qui suivent visent à illustrer la présente invention.

### EXEMPLES

### Exemple 1 : Préparation d'une composition de mastic de rebouchage selon l'invention

La composition de mastic de rebouchage préparée dans cet exemple est telle que décrite dans le tableau 1.

La composition a été obtenue par mélange des ingrédients dans un mélangeur de type planétaire.

### Copie propre

**Tableau 1. Composition de mastic de rebouchage selon l'invention**

| **Type** | **Ingrédients** | **Teneur (% en poids par rapport au poids total de la composition)** |
|---|---|---|
| Liant | Emulsion aqueuse de copolymère styrène-butadiène | 22% |
| Charge | Carbonate de calcium | 30% |
| Verre broyé | Grains de verre de granulométrie 0-800 µm | 45% |
| Fibres organiques | Fibres de polypropylène | 1% |
| Additif | Colorant universel | 1.95% |
| Agent odorant | Huile essentielle | 0.05% |

### Exemple 2 : Test de fissuration du mastic de rebouchage selon l'invention

400g de la composition de mastic de rebouchage telle que décrite dans l'exemple 1 ont été utilisés pour former un échantillon de mastic sec de 20 à 30 cm de diamètre et de 1 cm d'épaisseur.

Le séchage de la composition de mastic est effectué à température ambiante (20-25 °C) pendant 72 heures.

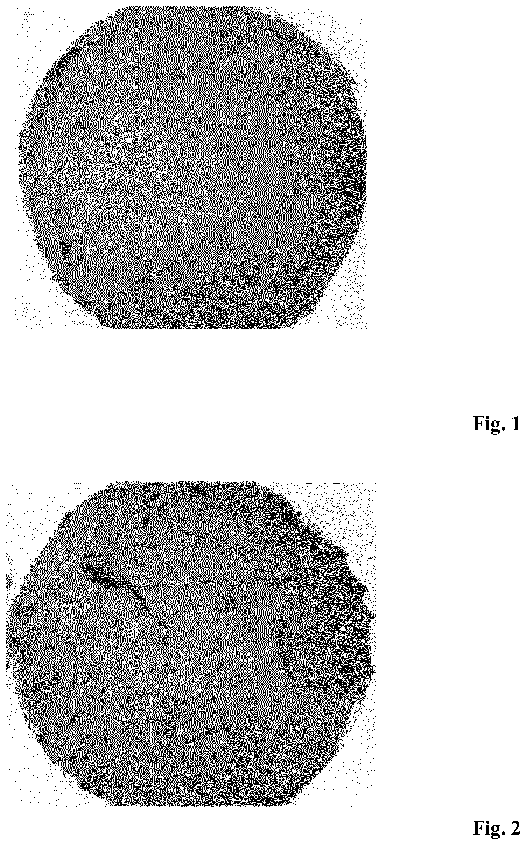

A 72 heures, l'état du mastic est observé et le nombre de fissure(s) est mesuré. La Figure 1 représente une photo de l'échantillon obtenu à 72 heures.

### Résultats

Comme le montre la Figure 1, aucune fissure n'est observée sur l'échantillon test.

### Exemple comparatif 3 : Test de fissuration d'un mastic de rebouchage selon l'invention ne comprenant pas de fibres organiques

Le test de fissuration décrit dans l'exemple 2 est reproduit avec une composition pour mastic de rebouchage telle que décrite dans le tableau 2. L'unique différence entre cette composition et la composition pour mastic préparée dans l'exemple 1 et testée dans l'exemple 2, est l'absence de fibres de polypropylène.

**Tableau 2. Composition de mastic de rebouchage sans fibres de polypropylène**

| **Type** | **Ingrédients** | **Teneur (% en poids par rapport au poids total de la composition)** |
|---|---|---|
| Liant | Emulsion aqueuse de copolymère styrène-butadiène | 22.2% |
| Charge | Carbonate de calcium | 30.3% |
| Verre broyé | Grains de verre de granulométrie 0-800 µm | 45.5% |
| Additif | Colorant universel | 1.95% |
| Agent odorant | Huile essentielle | 0.05% |

A 72 heures, l'état du mastic est observé et le nombre de fissure(s) est mesuré. La Figure 2 représente une photo de l'échantillon obtenu à 72 heures.

### Résultats

Comme le montre la Figure 2, l'apparition de fissure est observée sur l'échantillon test. On observe notamment l'apparition de deux importantes fissures.

## Revendications

1. Composition pour mastic de rebouchage comprenant de 0,001 % à 10 % en poids de fibres organiques et de 10 à 70 % en poids de grains de verre pilé de granulométrie moyenne de 0 à 3 mm, par rapport au poids total de la composition, dans laquelle lesdites fibres organiques sont choisies parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), les fibres de polyamide ou polyimide, les fibres d'aramide, les fibres de cellulose, de soie, de lin, de coton, de bambou, de viscose, d'acétate de cellulose, les chlorofibres, les fibres d'acide polylactique, les fibres de polyester, les fibres polyacryliques ou polymodacrylique, les fibres de polybenzimidazole, les fibres polyphénoliques, les fibres polyurées et polyuréthanes, et leurs mélanges.

2. Composition pour mastic de rebouchage selon la revendication 1, dans laquelle la teneur en fibres organiques est comprise de 0,001 % à 5 % en poids, plus avantageusement de 0,001 % à 1 % en poids, en particulier de 0,001 % à 0,1 % en poids, par rapport au poids total de la composition.

3. Composition pour mastic de rebouchage selon l'une quelconque des revendications 1 à 2, dans laquelle lesdites fibres organiques ont une longueur individuelle comprise de 1 à 50 mm, avantageusement de 1 à 20 mm, plus avantageusement de 1 à 10 mm.

4. Composition pour mastic de rebouchage selon l'une quelconque des revendications 1 à 3, dans laquelle les grains de verre ont une granulométrie moyenne de 0 à 1,5 mm, plus avantageusement de 0 à 800 µm.

5. Composition pour mastic de rebouchage selon l'une quelconque des revendications 1 à 4, dans laquelle la teneur en grains de verre est de 20 à 70 % en poids, par rapport au poids total de la composition.

6. Kit pour l'application d'une composition pour mastic de rebouchage comprenant :
i. une composition pour mastic de rebouchage telle que définies dans l'une quelconque des revendications 1 à 5 ;
ii. optionnellement, une cartouche pour pistolet à mastic ; et
iii. un pistolet à mastic,
dans lequel la composition pour mastic de rebouchage est adaptée pour être appliquée avec un pistolet à mastic.

7. Kit selon la revendication 6, dans lequel la composition est comprise dans une cartouche pour pistolet à mastic.

8. Procédé de rebouchage d'un support présentant des irrégularités telles que des trous, fentes ou aspérités, comprenant les étapes suivantes :
(A) application d'une composition de mastic pour rebouchage telle que définies dans l'une quelconque des revendications 1 à 5, sur ou dans les irrégularités du support ; et
(B) séchage de la composition, de préférence à température comprise entre 10 et 40 °C.

9. Procédé selon la revendication 8, dans lequel l'étape d'application (A) est effectuée à l'aide d'un pistolet à mastic, notamment à l'aide du kit tel que défini dans les revendications 6 et 7.

## Patentansprüche

1. Zusammensetzung für Füllspachtelmasse, die 0,001 Gew.-% bis 10 Gew.-% an organischen Fasern und 10 bis 70 Gew.-% an zerstoßenen Glaskörnchen mit einer mittleren Korngröße von 0 bis 3 mm in Bezug auf das Gesamtgewicht der Zusammensetzung umfasst, wobei die organischen Fasern aus den Polyvinylalkoholfasern (APV), den Polyacrylnitrilfasern (PAN), den Polyethylenfasern (PE), den Polyethylenfasern mit hoher Dichte (PEHD), den Polypropylenfasern (PP), den Polyamid- oder Polyimidfasern, den Aramidfasern, den Cellulosefasern, Seide, Leinen, Baumwolle, Bambus, Viskose, Cellulose-Acetat, den Chlorfasern, den Polymilchsäurefasern, den Polyesterfasern, den Polyacryl- oder Polymodacrylfasern, den Polybenzimidazolfasern, den Polyphenolfasern, den Polyharnstoff- und Polyurethanfasern, und deren Mischungen ausgewählt sind.

2. Zusammensetzung für Füllspachtelmasse nach Anspruch 1, wobei der Gehalt an organischen Fasern 0,001 Gew.-% bis 5 Gew.-%, vorteilhafter 0,001 Gew.-% bis 1 Gew.-%, insbesondere 0,001 Gew.-% bis 0,1 Gew.-% in Bezug auf das Gesamtgewicht der Zusammensetzung beträgt.

3. Zusammensetzung für Füllspachtelmasse nach einem der Ansprüche 1 bis 2, wobei die organischen Fasern eine Einzellänge aufweisen, die 1 bis 50 mm, vorteilhafterweise 1 bis 20 mm, vorteilhafter 1 bis 10 mm beträgt.

4. Zusammensetzung für Füllspachtelmasse nach einem der Ansprüche 1 bis 3, wobei die Glaskörnchen eine mittlere Korngröße von 0 bis 1,5 mm, vorteilhafter von 0 bis 800 µm aufweisen.

5. Zusammensetzung für Füllspachtelmasse nach einem der Ansprüche 1 bis 4, wobei der Gehalt an Glaskörnchen 20 bis 70 Gew.-% in Bezug auf das Gesamtgewicht der Zusammensetzung beträgt.

6. Kit zur Anwendung einer Zusammensetzung für Füllspachtelmasse, Folgendes umfassend:
i. eine Zusammensetzung für Füllspachtelmasse nach einem der Anspruche 1 bis 5;
ii. optional, eine Kartusche für eine Spachtelmassenpistole; und
iii. eine Spachtelmassenpistole,
wobei die Zusammensetzung für Füllspachtelmasse angepasst ist, um mit einer Spachtelmassenpistole aufgetragen zu werden.

7. Kit nach Anspruch 6, wobei die Zusammensetzung in einer Kartusche für Spachtelmassenpistole enthalten ist.

8. Verfahren zum Füllen einer Unterlage, die Mängel, wie Löcher, Schlitze oder Unebenheiten aufweist, die folgenden Schritte umfassend:
(A) Auftragen einer Zusammensetzung aus Füllspachtelmasse nach einem der Ansprüche 1 bis 5, auf oder in die Mängel der Unterlage; und
(B) Trocknen der Zusammensetzung, vorzugsweise bei einer Temperatur, die zwischen 10 und 40 °C liegt.

9. Verfahren nach Anspruch 8, wobei der Schritt des Auftragens (A) mithilfe einer Spachtelmassenpistole, insbesondere mithilfe des Kits nach den Ansprüchen 6 und 7 ausgeführt wird.

## Claims

1. Composition for a filler mastic comprising from 0.001 % to 10% by weight organic fibres and 10 to 70% by weight pounded-glass grains with a mean particle size of 0 to 3 mm, with respect to the total weight of the composition, wherein said organic fibres are selected from polyvinyl alcohol (PVA) fibres, polyacrylonitrile (PAN) fibres, polyethylene (PE) fibres, high-density polyethylene (HDPE) fibres, polypropylene (PP) fibres, polyamide or polyimide fibres, aramid fibres, cellulose, silk, linen, cotton, bamboo, viscose or cellulose acetate fibres, chlorofibres, polylactic acid fibres, polyester fibres, polyacrylic or polymodacrylic fibres, polybenzimidazol fibres, polyphenol fibres, polyurea and polyurethane fibres, and mixtures thereof.

2. Composition for filler mastic according to claim 1, wherein the organic fibre content is between 0.001% and 5% by weight, more advantageously 0.001% to 1% by weight, in particular 0.001 to 0.1% by weight, with respect to the total weight of the composition.

3. Composition for filler mastic according to either one of claims 1 to 2, wherein said organic fibres have an individual length of between 1 and 50 mm, advantageously 1 to 20 mm, more advantageously 1 to 10 mm.

4. Composition for filler mastic according to any one of claims 1 to 3, wherein the glass grains have a mean particle size of 0 to 1.5 mm, more advantageously 0 to 800 µm.

5. Composition for filler mastic according to any one of claims 1 to 4, wherein the glass grain content is from 20 to 70% by weight, with respect to the total weight of the composition.

6. Kit for applying a composition for filler mastic, comprising:
i. a composition for filler mastic as defined in any one of claims 1 to 5;
ii. optionally, a cartridge for a mastic gun; and
iii. a mastic gun,
wherein the composition for filler mastic is adapted to be applied with a mastic gun.

7. Kit according to claim 6, wherein the composition is comprised in a cartridge for a mastic gun.

8. Method for filling a support having irregularities such as holes, slits or roughnesses, comprising the following steps:
(A) applying a mastic composition for filling as defined in any one of claims 1 to 5, on or in the irregularities of the support; and
(B) drying the composition, preferably at a temperature of between 10 and 40°C.

9. Method according to claim 8, wherein the application step (A) is implemented by means of a mastic gun, in particular using the kit as defined in claims 6 and 7.
